# EUROPÄISCHE PATENTANMELDUNG

(11) **EP 3 130 995 A1**
(43) Veröffentlichungstag der Anmeldung: **15.02.2017**
(21) Anmeldenummer: 15181123.9
(22) Anmeldetag: 14.08.2015
(51) Int. Cl.: G06F 3/0481

(54) **SCHNITTDARSTELLUNG EINES GRAFISCHEN OBJEKTES AUF EINEM TOUCHSCREEN**

(71) Anmelder: Siemens Aktiengesellschaft, 80333 München (DE)
(72) Erfinder: Rodenbücher, Michaela, 90455 Nürnberg (DE); Scheuermann, Uwe, 90431 Nürnberg (DE)

(57) **Zusammenfassung**

Die Erzeugung von Schnittdarstellungen eines auf einem Touchscreen (1) dargestellten dreidimensionalen Objekts (2) soll vereinfacht werden. Hierzu ist vorgesehen, dass ein Schnittebenenabschnitt (3, 4) dadurch bestimmt wird, dass wenigstens zwei Geradenabschnitte (3A - 3D; 4A - 4D), die sich in einem Punkt berühren oder schneiden, den Schnittebenenabschnitt (3, 4) definieren und wobei durch Berühren wenigstens eines dieser Geradenabschnitte (3A - 3D; 4A - 4D) und anschließendes Ziehen mit einem Finger eines Benutzers der Schnittebenenabschnitt (3, 4) auf dem Touchscreen (1) positionierbar ist.

Durch die Erfindung können Schnittebenen in Bezug auf das Objekt (2) schnell dimensioniert, positioniert und orientiert werden.

## Beschreibung

Moderne CAD-Programme verfügen über die Möglichkeit, grafische Objekte auch mittels eines Touchscreens zu konstruieren. Dabei können Linien oder Flächen am Touchscreen erstellt und positioniert werden. Konstruierte Werkstücke lassen sich in der Regel dreidimensional darstellen und aus unterschiedlichen Blickwinkeln betrachten, wobei vorteilhaft eine gewünschte Ansicht intuitiv mittels entsprechender Bedienhandlungen auf dem Touchscreen eingestellt werden kann.

Insbesondere bei komplizierteren Objekten ist es oft wünschenswert, bestimmte Schnittdarstellungen eines Objektes, insbesondere eines Werkstücks, erzeugen zu können. Hierzu werden bislang entsprechende Schnittebenen auf dem Bildschirm angezeigt, die durch Eingabe von Parametern oder durch Betätigung entsprechender Buttons (x+, x-; y+, y-; z+, z-) auf dem Bildschirm positioniert werden können.

Nachteilig bei der Darstellung von Schnittdarstellungen mittels bekannter grafischer Bedienoberflächen ist, dass bei diesen die Festlegung von Schnittebenen umständlich und wenig intuitiv erfolgt.

Aufgabe der vorliegenden Erfindung ist es daher, Schnittdarstellung eines dreidimensionalen Objektes auf einer grafischen Bedienoberfläche leichter, schneller und intuitiver erzeugen zu können.

Diese Aufgabe wird gelöst durch ein Verfahren zum Bestimmen eines Schnittebenenabschnitts für eine Schnittdarstellung eines 3D-Objekts mittels eines Touchscreens, wobei wenigstens zwei Geradenabschnitte, die sich in einem Punkt berühren oder schneiden, den Schnittebenenabschnitt definieren und wobei durch Berühren wenigstens eines dieser Geradenabschnitte und anschließendes Ziehen mit dem Finger eines Benutzers der Schnittebenenabschnitt auf dem Touchscreen positionierbar ist

Ferner wird die Aufgabe gelöst durch einen Touchscreen in Verbindung mit einer grafischen Bedienoberfläche zur Durchführung des Verfahrens.

Bei dem erfindungsgemäßen Verfahren wird zum Bestimmen eines Schnittebenenabschnitts für eine Schnittdarstellung eines 3D-Objekts zunächst ein Schnittebenenabschnitt erzeugt und auf dem Touchscreen dargestellt. Vorteilhaft erfolgt die Erzeugung eines entsprechenden Schnittebenenabschnitts durch Betätigung eines entsprechenden Auswahl-Buttons durch Berührung des Touchscreens. Nach der entsprechenden Auswahl wird ein vorbestimmter Schnittebenenabschnitt auf dem Touchscreen angezeigt. Der Schnittebenenabschnitt wird durch wenigstens zwei sich schneidende oder berührende Geradenabschnitte definiert Diese beiden Geradenabschnitte spannen die entsprechende Schnittebene auf. Vorteilhaft ist das 3D-Objekt mit einem Bezugskoordinatensystem verknüpft. Weiterhin stimmt die erzeugte Schnittebene vorzugsweise mit einer durch dieses Koordinatensystem aufgespannten Ebene überein oder die erzeugte Schnittebene ist parallel zu einer durch das Koordinatensystem erzeugten Ebene. Ein gemäß diesen Vorgaben erzeugter Schnittebenenabschnitt lässt sich anschließend unter Zuhilfenahme der Touchscreen-Funktionalität nahezu beliebig dimensionieren und orientieren. Die Positionierung erfolgt vorteilhaft dadurch, dass ein Geradenabschnitt des betreffenden Schnittebenenabschnitts mit dem Finger berührt und durch Ziehen des Fingers auf dem Bildschirm verschoben wird. Vorzugsweise wird durch eine derartige Betätigung nicht nur der Geradenabschnitt, sondern der gesamte Schnittebenenabschnitt bei gleichbleibender Dimension parallel auf dem Bildschirm verschoben und positioniert.

Neben dem Erzeugen eines Schnittebenenabschnitts und dem Positionieren auf dem Touchscreen ist bei einer bevorzugten Ausführungsform unter Zuhilfenahme der Touchscreen-Funktionalität eine Anpassung der Größe des Schnittebenenabschnitts möglich. Dies geschieht vorzugsweise dadurch, dass wenigstens zwei Geradenabschnitte eines betreffenden Schnittebenenabschnitts gleichzeitig berührt werden. Durch eine Bewegung wenigstens eines der Berührpunkte relativ zu dem anderen wird der betreffende Geradenabschnitt verschoben und dadurch die Größe des Schnittebenenabschnitts verändert.

Neben einer Veränderung der Größe eines Schnittebenenabschnitts ist es ferner möglich, auch die Orientierung eines betreffenden Schnittebenenabschnitts im Raum in Bezug zu dem 3D-Objekt zu verändern. Die Änderung der Orientierung vollzieht sich unter Zuhilfenahme der Touchscreen-Funktionalität vorteilhaft dadurch, dass zwei Punkte eines Geradenabschnitts eines betreffenden Schnittebenenabschnitts gleichzeitig berührt und relativ zueinander bewegt, insbesondere geschwenkt werden. Dadurch wird der betreffende Geradenabschnitt und mit diesem auch der damit verbundene Schnittebenenabschnitt im Raum geschwenkt.

Durch die oben genannten Mechanismen ist es möglich, einen Schnittebenenabschnitt in Bezug auf ein auf dem Touchscreen dargestelltes 3D-Objekt beliebig zu dimensionieren, zu positionieren und zu orientieren. Schnittdarstellungen von Objekten, insbesondere von Werkstücken, können dadurch effizient, schnell und intuitiv erzeugt werden.

Zur einfacheren Bestimmung eines Schnittebenenabschnitts weist wenigstens ein Geradenabschnitt eines entsprechenden Schnittebenenabschnitts wenigstens eine Markierung auf, die mit einem Finger berührt und auf der Touchscreen-Oberfläche verschoben werden kann, so dass sich die Position des betreffenden Geradenabschnitts leichter verändern lässt. Die Markierung hat den Vorteil, dass nicht eine Gerade in Form einer dünnen Linie, sondern eine flächige, leicht auswählbare Markierung zur Auswahl der betreffenden Gerade berührt werden kann. Insbesondere bei einer Vielzahl dargestellter Schnittebenenabschnitte oder sonstiger grafischer Objekte auf dem Touchscreen erleichtert dies die Auswahl eines bestimmten Geradenabschnitts für die weitere Bearbeitung. Auch hier bewirkt vorteilhaft die Auswahl einer einzelnen bestimmten Markierung und das Ziehen der betreffenden Markierung auf dem Bildschirm eine Parallelverschiebung des betreffenden Schnittebenenabschnitts.

Werden gleichzeitig zwei Punkte bzw. Markierungen ausgewählt, die einem Geradenabschnitt zugeordnet sind, so kann dadurch der Geradenabschnitt und damit der damit verbundene Schnittebenenabschnitt im Raum geschwenkt werden. Werden zwei einem Schnittebenenabschnitt zugeordnete Punkte bzw. Markierungen gleichzeitig ausgewählt, die nicht auf einen einzigen zugeordneten Geradenabschnitt liegen, so lässt sich mittels einer entsprechenden Relativbewegung der ausgewählten Punkte bzw. Markierungen die Dimension des betreffenden Schnittebenenabschnitts variieren.

Die Erfindung lässt sich besonders vorteilhaft in Verbindung mit einer CNC-Steuerung verwenden, bei der das Objekt ein Werkstück ist, welches vor der Fertigung zunächst auf einer grafischen Bedienoberfläche der CNC-Steuerung grafisch veranschaulicht wird. Umfasst diese grafische Bedienoberfläche eine entsprechende Touchscreen-Funktionalität, so lassen sich gemäß der Erfindung sehr schnell Schnittdarstellungen des betreffenden Werkstücks auf der Bedienoberfläche erzeugen.

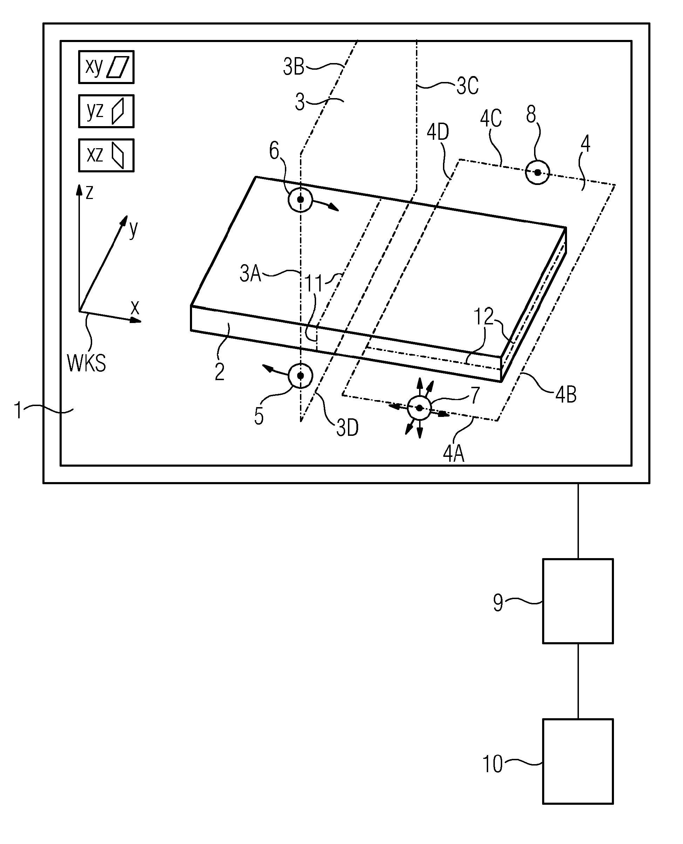

Die Erfindung wird nachfolgend anhand eines Ausführungsbeispiels näher erläutert. Dabei zeigt die Figur einen Touchscreen, auf dem ein Werkstück dreidimensional dargestellt ist.

Auf einem Touchscreen 1 mit einer grafischen Bedienoberfläche wird ein herzustellendes Werkstück 2 in dreidimensionaler Ansicht dargestellt. Vorteilhaft ist dem Werkstück 2 ein Werkstück-Koordinatensystem WKS in Form eines karthesischen Koordinatensystems mit den Achsen x, y und z zugeordnet. Der Touchscreen 1 mit der grafischen Bedienoberfläche ist z.B. Teil eines betreffendes CAD-System zur Konstruktion des Werkstücks 2 oder eines HMI (Human Machine Interface) in Verbindung mit einer Werkzeugmaschine zur Darstellung des Werkstücks 2. Er umfasst die Möglichkeit der Erzeugung von Schnittdarstellungen des Werkstücks 2. Da es eine schier unbegrenzte Anzahl an Möglichkeiten gibt, Schnitte in Bezug auf das Werkstück 2 festzulegen, umfasst die betreffende grafische Bedienoberfläche in Verbindung mit dem Touchscreen 1 entsprechende Mittel zur Festlegung betreffender Schnitte. Vorteilhaft sind diesbezüglich auf der Touchscreen-Oberfläche entsprechende Buttons "XY", "YZ" sowie "XZ" vorbelegt. Bei Betätigung des Buttons "XY" wird ein Schnittebenenabschnitt in der XY-Ebene erzeugt und in vorbestimmter Dimensionierung und Lage auf dem Touchscreen 1 angezeigt.

Der Schnittebenenabschnitt 4 ist durch die vier Geradenabschnitte 4A, 4B, 4C und 4D festgelegt. Ferner ist wenigstens einem Geradenabschnitt des Schnittebenenabschnitts 4 eine Markierung zugeordnet. Im Ausführungsbeispiel umfasst der Geradenabschnitt 4A des Schnittebenenabschnitts 4 die Markierung 7 und der Geradenabschnitt 4C die Markierung 8. Durch Berührung einer dieser Markierungen, beispielsweise der Markierung 7, wird der zugeordnete Geradenabschnitt, beispielsweise der Geradenabschnitt 4A, ausgewählt. Wird nun die Markierung 7 mit dem Finger auf dem Bildschirm gezogen, so wird dadurch der betreffende Schnittebenenabschnitt 4 bei gleicher Dimension parallel im Raum verschoben. Dadurch kann die Position der Schnittebene 4 schnell und einfach beliebig im Raum variiert werden.

Soll die Dimension des Schnittebenenabschnitts 4 verändert werden, so werden die Markierungen 7 und 8 gleichzeitig berührt. Werden nun die beiden Markierungen 7 und 8 aufeinander zubewegt, so verkleinert sich dadurch der Schnittebenenabschnitt 4 entsprechend. Umgekehrt wird der Schnittebenenabschnitt 4 vergrößert, wenn die beiden Markierungen 7 und 8 voneinander weg bewegt werden. Ebenso können auch die beiden Geradenabschnitte 4B und 4D entsprechende Markierungen aufweisen (nicht dargestellt), so dass durch Berühren und Ziehen einer entsprechenden Markierung der Schnittebenenabschnitt 4 bei gleichbleibender Dimension im Raum verschoben wird und bei gleichzeitiger Betätigung einer weiteren Markierung die Dimension entsprechend verändert wird.

Eine weitere vorteilhafte Ausgestaltung der Erfindung sieht vor, dass ein zu einem Schnittebenenabschnitt gehörender Geradenabschnitt zwei Markierungen aufweist. Dadurch wird es möglich, durch eine entsprechende Bedienhandlung den betreffenden Schnittebenenabschnitt auf einfache Weise im Raum zu schwenken. Im Ausführungsbeispiel weist der Geradenabschnitt 3A des Schnittebenenabschnitts 3 die beiden Markierungen 5 und 6 auf. Werden diese gleichzeitig berührt und in die jeweilige Pfeilrichtung gezogen, so wird dadurch der Schnittebenenabschnitt 3 um eine in dem Schnittebenenabschnitt liegende und senkrecht zu dem Geradenabschnitt 3A verlaufende Achse geschwenkt, die sich zwischen den beiden Markierungen 5 und 6 befindet.

Vorteilhaft kann auch die Lage der Markierungen bezüglich der zugeordneten Geradenabschnitte variiert werden. So sieht beispielsweise eine Ausführungsform vor, dass wenn zwei auf einem Geradenabschnitt liegende Markierungen aufeinander zu oder voneinander weg bewegt werden, sich lediglich die Lage der Markierungen verändert und die Position des betreffenden Schnittebenenabschnitts gleich bleibt. Werden im Ausführungsbeispiel z.B. die Markierungen 5 und 6 berührt und bei gleichbleibender Position der Markierung 5 die Markierung 6 auf die Markierung 5 zubewegt, so verändert sich lediglich die Position der Markierung 6 entlang des Geradenabschnitts 3A. Wird anschließend auf konstant gehaltener Position der Markierung 6 die Markierung 5 z.B. in Pfeilrichtung gezogen, so wird der Schnittebenenabschnitt 3 um eine durch die Markierung 6 verlaufende Schwenkachse geschwenkt. Auch dadurch ist es möglich, die Lage und Orientierung von Schnittebenen sehr schnell und einfach zu variieren.

Selbstverständlich ist neben den beschriebenen Gesten zum Bestimmen und Positionieren von Schnittebenen noch eine Vielzahl weiterer Gesten denkbar, durch die ebenfalls eine schnelle und einfache Positionierung und Orientierung von Schnittebenen erreicht werden kann.

Weiterhin zeigt das Ausführungsbeispiel nur eine kleine Auswahl an Möglichkeiten einer grafischen Bedienoberfläche in Verbindung mit der Erfindung. So sind hier die Schnittebenen 3, 4 selbst als auch die Schnittkanten 11 bzw. 12 der Schnittebenen 3, 4 mit dem Werkstück 2 nur als (strichlierte) Linien angedeutet. Hierzu gibt es eine Vielzahl an sich bekannter Methoden, um Ebenen bzw. Schnittlinien dreidimensional auf einem Bildschirm darzustellen. Insbesondere die Verwendung von Einfärbungen (nicht dargestellt) kann zur besseren Veranschaulichung der Schnittlinien bzw. Schnittflächen dienen.

Die Erfindung kann besonders vorteilhaft in einer CNC-Steuerungs-Umgebung angewendet werden. Diese umfasst neben dem Touchscreen 1 als Bedienerschnittstelle bzw. Mensch-Maschine-Interface (HMI) einen CNC-Steuerungs-Rechner 9. Auf dem Touchscreen 1 kann so ein herzustellendes Werkstück zunächst in dreidimensionaler Ansicht betrachtet werden, wobei durch die Möglichkeit der Schnittdarstellung besonderes Augenmerk auf kompliziertere geometrische Gegebenheiten des Werkstücks wie Hohlräume, Taschen, Bohrungen etc. gelegt werden kann. So können bestimmte Vorgaben des Werkstücks 2 zunächst auf dem Touchscreen 1 kontrolliert werden, bevor die Herstellung des realen Werkstücks auf einer Werkzeugmaschine 10 erfolgt. Durch die Erfindung können Schnittebenen auf der grafischen Bedienoberfläche des Touchscreen 1 direkt, schnell und einfach bestimmt werden, ohne hierzu weitere Bedienmittel (z.B. eine Computer-Maus) vorsehen zu müssen. Dies ist einer Werkstatt-Umgebung sehr hilfreich.

## Patentansprüche

1. Verfahren zum Bestimmen eines Schnittebenenabschnitts (3, 4) für eine Schnittdarstellung eines 3D-Objekts (2) mittels eines Touchscreens (1), wobei wenigstens zwei Geradenabschnitte (3A - 3D; 4A - 4D), die sich in einem Punkt berühren oder schneiden, den Schnittebenenabschnitt (3, 4) definieren und wobei durch Berühren wenigstens eines dieser Geradenabschnitte (3A - 3D; 4A - 4D) und anschließendes Ziehen mit dem Finger eines Benutzers der Schnittebenenabschnitt (3, 4) auf dem Touchscreen (1) positionierbar ist.

2. Verfahren nach Anspruch 1, wobei durch Berühren des Geradenabschnitts (3A - 3D; 4A - 4D) in einem Berührpunkt und anschließendes Ziehen der Schnittebenenabschnitt (3, 4) parallel auf dem Touchscreen (1) verschiebbar ist.

3. Verfahren nach Anspruch 1 oder 2, wobei durch Berühren des Geradenabschnitts (3A - 3D; 4A - 4D) in zwei Berührpunkten und anschließendes Ziehen der Berührpunkte der Schnittebenenabschnitt (3, 4) um eine Achse schwenkbar ist.

4. Verfahren nach einem der Ansprüche 1 bis 3, wobei durch Berühren von zwei Geradenabschnitten (7, 8) eines Schnittebenenabschnitts (4) und anschließendes Ziehen wenigstens eines der berührten Geradenabschnitte (4A) der Schnittebenenabschnitt (4) in seiner Größe veränderbar ist.

5. Verfahren nach einem der Ansprüche 1 bis 4, wobei wenigstens einer der Geradenabschnitte (3A; 4A, 4C) wenigstens eine Markierung (5, 6; 7, 8) aufweist und der Schnittebenenabschnitt (3, 4) durch Berühren und Ziehen der Markierung (5, 6; 7, 8) positionierbar ist.

6. Touchscreen (1) mit einer grafischen Bedienoberfläche zur Durchführung eines Verfahrens nach einem der Ansprüche 1 bis 5.

7. CNC-Steuerung (9) mit einem Touchscreen (1) und einer grafischen Bedienoberfläche nach Anspruch 6.
